# EUROPEAN PATENT SPECIFICATION

(11) **EP 4 585 994 B1**
(45) Date of publication and mention of the grant of the patent: **28.10.2026**
(21) Application number: 25179137.2
(22) Date of filing: 11.12.2020
(51) Int. Cl.: G02B 27/01, G02C 3/00

(54) **EXPANDABLE BAND SYSTEM FOR SPATIAL COMPUTING HEADSET OR OTHER WEARABLE DEVICE**
ERWEITERBARES BANDSYSTEM FÜR RAUMBERECHNUNGSKOPFHÖRER ODER ANDERE TRAGBARE VORRICHTUNG
SYSTÈME DE BANDE EXTENSIBLE POUR CASQUE D'ÉCOUTE INFORMATIQUE SPATIALE OU AUTRE DISPOSITIF VESTIMENTAIRE

(30) Priority: 13.12.2019 US 201962947754 P
(43) Date of publication of application: 16.07.2025
(62) Document number(s) of the earlier application(s) in accordance with Art. 76 EPC: 20897715.7 / 4 073 575
(73) Proprietor: Magic Leap, Inc., Plantation, FL 33322 (US)
(72) Inventor: SKELTON, Robert Coleman, Sunrise 33313 (US)
(74) Representative: FRKelly

(56) References cited:
- FR-A- 1 551 507
- US-A1- 2007 268 449
- US-A1- 2018 299 681

## Description

### TECHNICAL FIELD

This disclosure generally relates to systems for securing a spatial computing headset or other wearable device to a user.

### BACKGROUND OF THE INVENTION

Spatial computing headsets, including virtual reality and augmented reality headsets, have proven invaluable for many applications, spanning the fields of scientific visualization, medicine and military training, engineering design and prototyping, tele-manipulation and tele-presence, and personal entertainment systems. In spatial computing headsets, virtual or augmented scenes are displayed to a user via an optics assembly that is positionable and securable to a user's head in front of the user's eyes. Many different systems and techniques exist for securing such optics assemblies to a user's head, including various headband structures with mechanisms for fit adjustment. However, such systems and techniques may suffer from various drawbacks. For example, known fit adjustment mechanisms may be overly complex, bulky, lack precision and/or include a limited range of motion. Relevant prior art is found in US 2018/299681 A1 and FR 1 551 507 A.

### SUMMARY OF THE INVENTION

The invention is set out in the appended set of claims. Embodiments described herein provide expandable band systems for wearable devices, such as spatial computing headsets, which have flexible and conformable form factors that enable users to reliably secure such wearable devices in place. Further, in the context of spatial computing headsets with an optics assembly supported by opposing temple arms, the expandable band systems provide protection against over-extension of the temple arms or extreme deflections that may otherwise arise from undesirable torsional loading of the temple arms (e.g., twisting one temple arm up and one temple arm down).

According to one embodiment, an expandable band system to assist in securing a wearable device to a user may be summarized as including a pair of sheath assemblies; and an inner band assembly movably coupled to and spanning between the sheath assemblies, the inner band assembly including a pair of biasing mechanisms coupled to the sheath assemblies for biasing the sheath assemblies toward each other. The expandable band system may be movable between a retracted configuration, in which the sheath assemblies are apposed (e.g., relatively closer together), and an expanded configuration, in which the sheath assemblies are separated (e.g., relatively further apart).

Each biasing mechanism includes a fixed end and a floating end opposite the fixed end, with the fixed end being secured to a respective one of the sheath assemblies. Each biasing mechanism includes an elongated compression spring and a flexible filament extending through the elongated compression spring, with the flexible filament including a spring stop at the floating end of the biasing mechanism. The inner band assembly further includes a band-like enclosure that surrounds the elongated compression springs of the biasing mechanisms.

The band-like enclosure is slidably received in the sheath assemblies to slidably extend from the sheath assemblies as the system moves from the retracted configuration to the expanded configuration. The band-like enclosure may include a respective compression spring passageway for each elongated compression spring to assist in preventing the elongated compression springs from buckling as the system moves from the retracted configuration to the expanded configuration. A central portion of the band-like enclosure may be exposed as the system moves from the retracted configuration to the expanded configuration. The band-like enclosure may be configured to withdraw from the sheath assemblies and simultaneously compress each of the elongated compression springs as the system moves from the retracted configuration to the expanded configuration.

A braking device may be provided between at least one of the sheath assemblies and the band-like enclosure of the inner band assembly to resist movement of the band-like enclosure relative to the sheath assemblies. Similarly, a lock device may be provided between at least one of the sheath assemblies and the band-like enclosure of the inner band assembly to prevent movement of the band-like enclosure relative to the sheath assemblies.

Each sheath assembly may comprise a flexible band-like form factor. Each sheath assembly may include a plurality of cage elements that collectively define a cage structure that at least partially surrounds a respective end of the band-like enclosure of the inner band assembly when the system is in the retracted configuration. The plurality of cage elements may be spaced apart along a length of the sheath assembly to enable the sheath assembly to flex and assume a different curvature profile. Each sheath assembly may include an internal guiding structure, and the internal guiding structure and the plurality of cage elements may collectively define a band receiving passageway for accommodating the band-like enclosure of the inner band assembly. Each sheath assembly may include an inner pad for engaging the user's body and an outer cover. The inner pad and the outer cover may collectively define an enclosure for housing the internal guiding structure and the plurality of cage elements.

The sheath assemblies and the inner band assembly may collectively define a flexible and extendable band-like structure that is conformable to a profile of the user's body. The expandable band system may be incorporated in a spatial computing headset or other wearable device, such as, for example, a smartwatch. For example, a spatial computing headset, according to one example embodiment, may be summarized as including: an optics assembly; a pair of temple arms movably coupled to the optics assembly; and an expandable band system to assist in securing the spatial computing headset to a head of a user, the expandable band system spanning between aft ends of the temple arms. The expandable band system includes a pair of sheath assemblies; and an inner band assembly movably coupled to and spanning between the sheath assemblies, the inner band assembly including a pair of biasing mechanisms coupled to the sheath assemblies for biasing the sheath assemblies together. The expandable band system may be movable between a retracted configuration, in which the sheath assemblies are apposed (e.g., relatively closer together), and an expanded configuration, in which the sheath assemblies are separated (e.g., relatively further apart).

The expandable band system may be configured to assist in biasing the temple arms toward each other. The expandable band system may be flexible and biased toward the retracted configuration to conform to the head of the user to provide a generally uniform retention force. The expandable band system may be configured to resist over-extension and extreme deflection of the temple arms.

### BRIEF DESCRIPTION OF THE DRAWINGS

Figure 1 is an isometric view of a spatial computing headset including an expandable band system according to one example embodiment with the expandable band system in a retracted configuration.
Figure 2 is an isometric view of the spatial computing headset of Figure 1 with the expandable band system in an expanded configuration.
Figure 3 is an isometric view of the expandable band system in the retracted configuration shown isolated from the remainder of the spatial computing headset of Figures 1 and 2.
Figure 4 is an isometric view of the expandable band system with inner pads of the expandable band system removed to reveal underlying components.
Figure 5 is an isometric view of an inner band assembly of the expandable band system shown isolated from the remainder of the system, and with a portion of a band-like enclosure thereof cut away to reveal underlying components.
Figure 6 is an isometric view of the inner band assembly of the expandable band system with an inner portion of band-like enclosure removed to reveal underlying components.
Figure 7 is an isometric view of internal guiding structures of the expandable band system that assist in guiding the inner band assembly as the system moves between the retracted configuration and the expanded configuration.
Figure 8 is an isometric view of a portion of an expandable band system showing a variant having a braking device.
Figure 9 is an isometric view of a portion of an expandable band system showing a variant having a lock device.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with spatial computing headsets and fit adjustment systems for securing the same to a user have not been shown or described in detail to avoid unnecessarily obscuring descriptions of the embodiments.

Unless the context requires otherwise, throughout the specification and claims which follow, the word "comprise" and variations thereof, such as, "comprises" and "comprising" are to be construed in an open, inclusive sense that is as "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

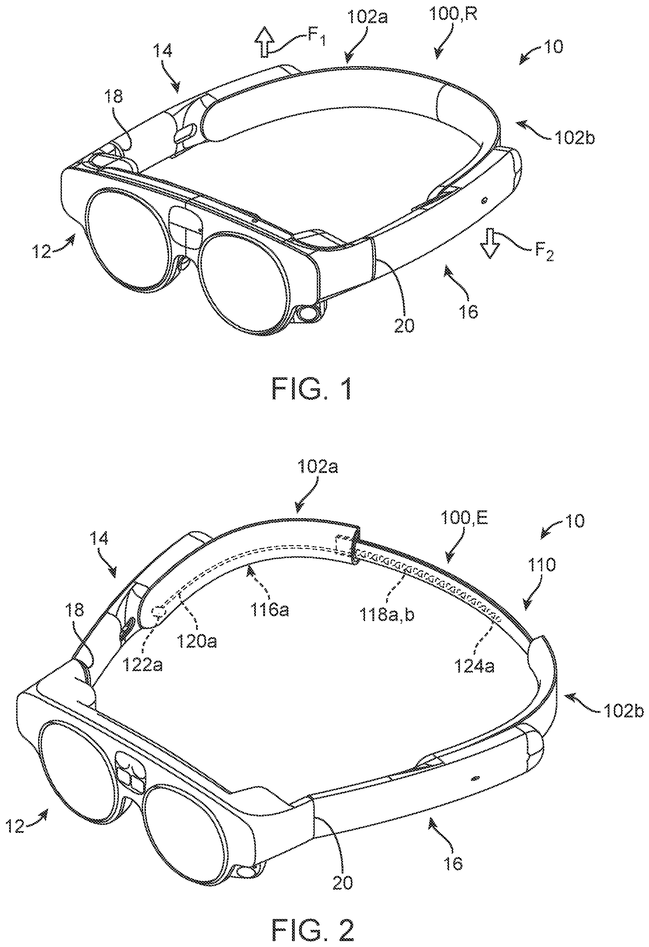

Figures 1 through 7 show one example embodiment of an expandable band system 100 to assist in securing a wearable device to a user. In particular, and with reference to Figures 1 and 2, the expandable band system 100 is provided for securing a spatial computing headset 10 to a user's head. The spatial computing headset 10 includes an optics assembly 12 supported by a pair of temple arms 14, 16. Well-known structures and devices associated with spatial computing headsets (e.g., optical components and internal electronic circuitry) are not shown or described in detail to avoid unnecessarily obscuring descriptions of the embodiments disclosed herein. The example wearable device shown in Figures 1 and 2 is non-limiting, and embodiments may be employed in other suitable (e.g., wearable) device arrangements.

Notably, the temple arms 14, 16 of the example headset 10 are movably coupled to the optics assembly 12 at joints 18, 20. Such joints 18, 20 may include a hinge mechanism or other movable joint (not visible) that enables the temple arms 14, 16 to move relative to the optics assembly 12 in one or more directions and within a limited range of motion. For instance, the example headset 10 includes hinges at joints 18, 20 with associated stops that enable the temple arms 14 to spread outwardly (i.e., away from a sagittal plane of the user) about twenty degrees from the retracted configuration R shown in Figure 1 to the expanded configuration E shown in Figure 2. The hinges may include one or more biasing members (e.g., torsional springs) that urge the temple arms 14, 16 back toward the retracted configuration R shown in Figure 1 which may act in coordination with the expandable band systems described herein. In other instances, the hinges may lack such biasing members.

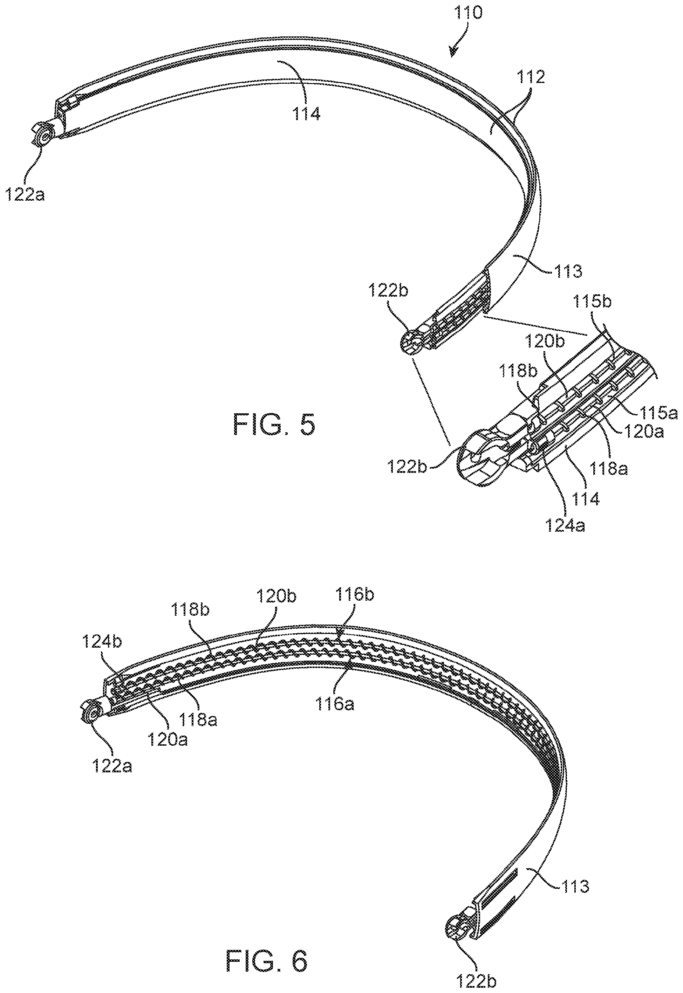

With continued reference to Figures 1 and 2, the expandable band system 100 of the illustrated embodiment is coupled to and spans between aft ends of the temple arms 14, 16. The expandable band system 100 includes a pair of sheath assemblies 102a, 102b and an inner band assembly 110 (visible in Figure 2) that is movably coupled to and spans between the sheath assemblies 102a, 102b. As will be described in more detail elsewhere herein, the inner band assembly 110 includes a pair of biasing mechanisms 116a, 116b (Figure 6) that are coupled to the sheath assemblies 102a, 102b for moving (i.e., biasing) the sheath assemblies 102a, 102b towards the retracted configuration R shown in Figure 1. The expandable band system 100 is movable between the retracted configuration R, in which the sheath assemblies 102a, 102b are apposed (e.g., relatively closer together), and the expanded configuration E shown in Figure 2, in which the sheath assemblies 102a, 102b are separated (e.g., relatively further apart).

Conveniently, in operation, a user may spread the temple arms 14, 16 of the spatial computing headset 10 to the configuration shown in Figure 2, whereby the movement of the temple arms 14, 16 causes the sheath assemblies 102a, 102b to separate and the inner band assembly 110 to withdraw from the sheath assemblies 102a, 102b against the force of the biasing mechanisms 116a, 116b. The user can then position the headset 10 for use with the optics assembly 12 located in front of the user's eyes and with the temple arms 14, 16 extending past the user's temples, and then allow the temple arms 14, 16 to retract toward the retracted configuration R shown in Figure 1 until the sheath assemblies 102a, 102b (and/or the temple arms 14, 16) contact the user's head and apply a retention force thereto to assist in securing the headset 10 in place. In this manner, the expandable band system 100 is configured to at least partially assist in moving/biasing the temple arms 14, 16 toward each other. In some instances, the expandable band system 100 may provide the sole means of moving/biasing the temple arms 14, 16 toward each.

Further, according to the example embodiment, the expandable band system 100 is flexible and conformable to a user's head to provide a generally uniform retention force, which enhances product stability, fit and/or comfort. Advantageously, the expandable band system 100 is also configured to resist over-extension and extreme deflection of the temple arms 14, 16 by providing substantial resistance and/or hard stops to undesirable movement of the temple arms 14, 16. For example, the expandable band system 100 may reduce and/or counteract torsional loads that may otherwise be transferred to the optics assembly 12 via the joints 18, 20 when twisting one temple arm 14 up and one temple arm 16 down, as represented by the arrows labeled F1 and F2 in Figure 1. This can be advantageous in that the expandable band system 100 can therefore assist in preventing damage to vulnerable components of the optics assembly 12 that might otherwise result from such torsional loading.

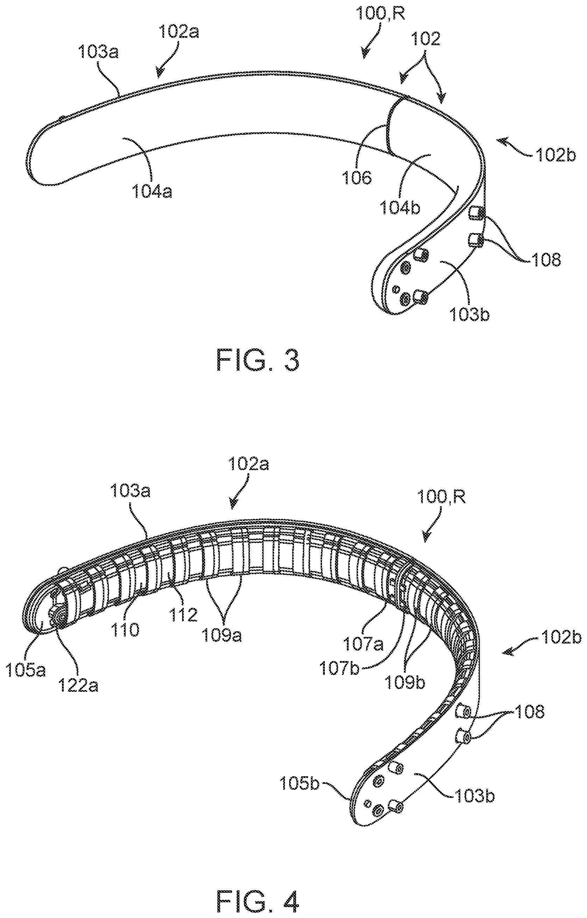

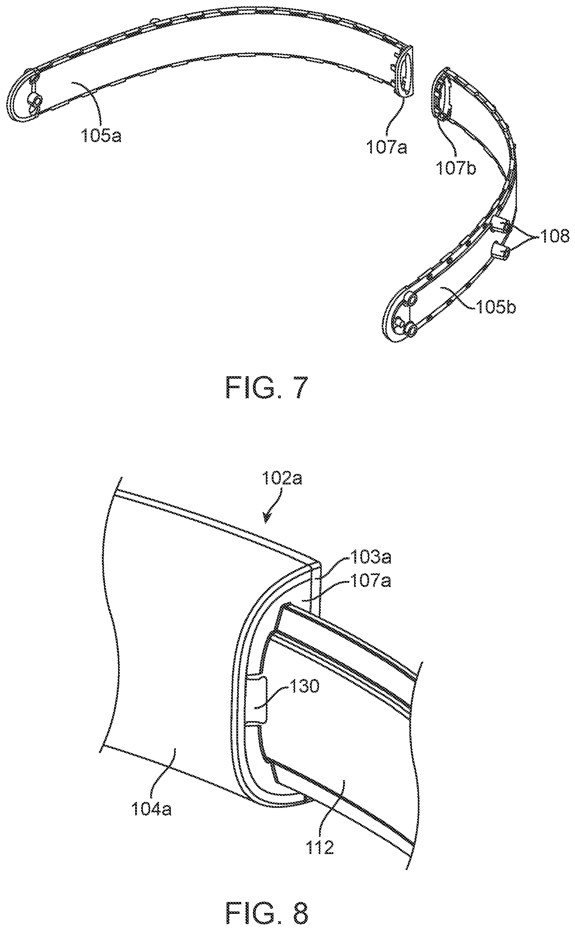

Further details of the expandable band system 100 will now be described with reference to Figures 3 through 7, wherein: Figure 3 shows the expandable band system 100 in the retracted configuration and isolated from the remainder of the spatial computing headset 10; Figure 4 shows the expandable band system 100 with inner pads 104a, 104b of the sheath assemblies 102a, 102b of the expandable band system 100 removed to reveal underlying components, including the inner band assembly 110; Figure 5 shows the inner band assembly 110 isolated from the remainder of the expandable band system 100, and with an outer portion 113 of a band-like enclosure 112 of the inner band assembly cut back to reveal underlying components; Figure 6 shows the inner band assembly 110 with an inner portion 114 of band-like enclosure 112 removed to reveal underlying components; and Figure 7 shows internal guiding structures 105a, 105b of the expandable band system 100 that assist in guiding the inner band assembly 110 as the system 100 moves between the retracted configuration R and the expanded configuration E.

With reference to Figure 3, the illustrated embodiment of the expandable band system 100 includes opposing sheath assemblies 102a, 102b (collectively 102), which in the retracted configuration R of the expandable band system 100, abut each other at seam location 106 to form a generally continuous band or band-like form factor with the inner band assembly 110 concealed therein. Each sheath assembly 102a, 102b includes an inner pad 104a, 104b for engaging the user's head (or other body part) and an outer cover 103a, 103b. Outer cover 103a, 103b and inner pad 104a, 104b collectively define an enclosure for internal components of the sheath assemblies 102a, 102b. The sheath assemblies 102a, 102b further include a mounting arrangement 108 (e.g., threaded inserts) for securing the expandable band system 100 to the temple arms 14, 16 of the spatial computing headset 10 of Figures 1 and 2 (or to other wearable devices).

With reference to Figure 4, a plurality of cage elements 109a, 109b are provided beneath the inner pads 104a, 104b of each sheath assembly. The cage elements 109a, 109b collectively define a cage structure that at least partially surrounds a respective end of the band-like enclosure 112 of the inner band assembly 110 when the system 100 is in the retracted configuration R, and which assists in guiding the band-like enclosure 112 as it moves between the retracted configuration R and the expanded configuration E. Notably, for each sheath assembly 102a, 102b, the plurality of cage elements 109a, 109b are spaced apart along a length of the sheath assembly 102a, 102b to enable the sheath assembly 102a, 102b to flex and assume a different curvature profile, while at the same time providing structural integrity to the expandable band system 100.

Each sheath assembly 102a, 102b of the example embodiment further includes an internal guiding structure 105a, 105b, which is shown in greater detail in Figure 7. The internal guiding structure 105a, 105b and the plurality of cage elements 109a, 109b of each sheath assembly 102a, 102b collectively define a respective band receiving passageway for accommodating one of the opposing ends of the band-like enclosure 112 of the inner band assembly 110. The internal guiding structure 105a, 105b and the plurality of cage elements 109a, 109b may be rigid components that exhibit little to no deformation during operation. The internal guiding structure 105a, 105b and the plurality of cage elements 109a, 109b of each sheath assembly 102a, 102b may be said to provide the sheath assembly 102a, 102b with a rigid skeletal structure.

Each sheath assembly 102a, 102b of the example embodiment further includes an end cap 107a, 107b, which includes an aperture through which a respective end of the band-like enclosure 112 passes. The end caps 107a, 107b may abut each other when the expandable band system 100 is in the retracted configuration R, and may provide a stop for establishing said retracted configuration R.

With reference to Figure 5 and 6, the inner band assembly 110 includes the aforementioned pair of biasing mechanisms 116a, 116b and the band-like enclosure 112. Each biasing mechanism 116a, 116b includes a fixed end 122a, 122b and a floating end 124a, 124b opposite the fixed end 122a, 122b. Each fixed end 122a, 122b protrudes from a respective end of the band-like enclosure 112 and is fixedly secured to a respective one of the sheath assemblies 102a, 102b, as shown in Figure 4. For this purpose, each fixed end 122a, 122b may be provided with a fastening element for securing the fixed ends 122a, 122b of the biasing mechanisms 116a, 116b to the sheath assemblies 102a, 102b. For example, the fixed end 122a, 122b of the example embodiment includes a fastening anchor with an internal cavity sized to engage a corresponding protrusion of the internal guiding structure 105a, 105b of the sheath assembly 102a, 102b to which it is fixed. The fastening anchor further includes an aperture to receive a threaded fastener to retain the fastening anchor in place. In contrast, the floating end 124a, 124b of each biasing mechanism 116a, 116b is contained within the band-like enclosure 112 and is free to move relative to the band-like enclosure 112 as the system 100 transitions between the retracted configuration R and the expanded configuration E.

With continued reference to Figures 5 and 6, each biasing mechanism 116a, 116b further includes an elongated compression spring 118a, 118b (e.g., a metal compression spring) and a flexible filament 120a, 102b (e.g., a metal cable) extending through the elongated compression spring 118a, 118b. Each flexible filament 120a, 102b includes a spring stop at the floating end 124a, 124b, which abuts or is otherwise adjacent to one end of the corresponding compression spring 118a, 118b, as shown in the enlarged detail view of Figure 5. The other end of each compression spring 118a, 118b is provided with or abuts a corresponding collar that is displaceable along a length of the flexible filament 120a, 102b as the band-like enclosure 112 is withdrawn from the sheath assemblies 102a, 102b as the system 100 transitions between the retracted configuration R and the expanded configuration E. More particularly, as the sheath assemblies 102a, 102b move toward the expanded configuration E, the band-like enclosure 112 is withdrawn from the sheath assemblies 102a, 102b and simultaneously compresses each of the compression springs 118a, 118b by pulling the collar toward the floating end 124a, 124b. Conversely, as the sheath assemblies 102a, 102b are allowed to move back toward the retracted configuration R, the band-like enclosure 112 retreats back into the sheath assemblies 102a, 102b and relieves the compression of the springs 118a, 118b. As shown in Figures 5 and 6, the biasing mechanisms 116a, 116b may be provided in a parallel relationship and the orientation of each biasing mechanism 116a, 116b may be the opposite of each other. In addition, each biasing mechanism 116a, 116b may extend at least a majority of a length of the expandable band system 100 or nearly an entire length of the expandable band system 100 (e.g., greater than 80%, 90% or 95% of the entire length).

With continued reference to Figures 5 and 6, the band-like enclosure 112 includes a respective compression spring passageway 115a, 115b for each elongated compression spring 118a, 118b to assist in preventing the elongated compression springs 118a, 118b from buckling as the system 100 moves from the retracted configuration R to the expanded configuration E. The compression spring passageways 115a, 115b may be formed, for example, in an inner portion 114 of the enclosure 112, as shown in the enlarged detail view of Figure 5, and capped by an outer portion 113 of the enclosure 112. Conversely, the compression spring passageways 115a, 115b may be formed in the outer portion 113 of the enclosure 112 and capped by the inner portion 114 of the enclosure 112. In either event, it may be said that the compression spring passageways 115a, 115b are formed collectively by opposing portions of the enclosure 112. Still further, in other instances, the band-like enclosure 112 of the inner band assembly 110 may be formed integrally as a one-piece structure with compression spring passageways 115a, 115b provided therein. The band-like enclosure 112 may be semi-rigid to provide a flexible component that also provides some structural rigidity to resist buckling of the compression springs 118a, 118b during operation. The band-like enclosure 112 may comprise, for example, a flexible silicone material.

According to the illustrated embodiment, the inner band assembly 110 is slidably received in the sheath assemblies 102a, 102b to slidably extend from the sheath assemblies 102a, 102b as the expandable band system 100 moves from the retracted configuration R to the expanded configuration E. The biasing mechanisms 116a, 116b contained in the inner band assembly 110 are fixedly coupled at one end to the sheath assemblies 102a, 102b and arranged to urge the sheath assemblies 102a, 102b together towards the retracted configuration R. Again, as the sheath assemblies 102a, 102b move toward the expanded configuration E, such as by a user spreading the temple arms 14, 16 of the headset 10, the band-like enclosure 112 of the inner band assembly 110 is withdrawn from the sheath assemblies 102a, 102b and simultaneously compresses each of the elongated compression springs 118a, 118b. The stored energy in the compression springs 118a, 118b then acts to move the sheath assemblies 102a, 102b back together towards the retracted configuration R when the temple arms 14, 16 are released by the user. The expandable band system 100 then conforms to a profile of the user's head and secures the headset 10 in place to maintain proper registration/alignment of the wearable device.

With reference now to Figure 8, the expandable band system 100 may in some instances further include a braking device between at least one of the sheath assemblies 102a, 102b and the band-like enclosure 112 of the inner band assembly 110 to resist movement of the band-like enclosure 112 relative to the sheath assemblies 102a, 102b. For example, the braking device may include an engagement member 130, in this case a portion of the inner pad 104a, that is positioned nearly in contact with the band-like enclosure 112 and then urged into contact with band-like enclosure 112 as the user-facing pad 104a is compressed via engagement with the user. In this manner, when the expandable band system 100 is placed on the head and the user's head compresses the inner pad 104a, the engagement member 130 of the pad 104a, which serves as the braking device, then contacts the moving band-like enclosure 112, providing a braking force which would increase if the user pressed the expandable band system 100 in manually to provide a more snug fit. This would allow the user to implement a higher retention force than what can be provided by the compression springs 118a, 118b alone. When the user removes the expandable band system 100, the braking force would be removed and allow the expandable band system 100 to return naturally to the initial, non-braked state, namely, the retracted configuration R shown in Figure 1.

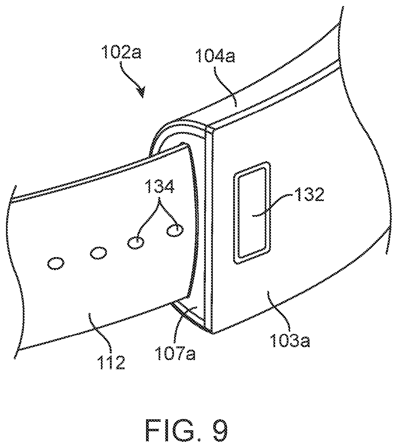

With reference now to Figure 9, the expandable band system 100 may in some instances further include a lock device between at least one of the sheath assemblies 102a, 102b and the band-like enclosure 112 of the inner band assembly 110 to prevent movement of the band-like enclosure 112 relative to the sheath assemblies 102a, 102b. For example, the lock device may include a push-button lock 132 on a backside of the sheath assembly 102a which may be selectively actuated by the user to engage one of a plurality of detents 134 in the band-like enclosure 112 to lock the position of the expandable band system 100 in a desired intermediate configuration. In this manner, a user may adjust the fit of the expandable band system 100 and then lock the expandable band system 100 in a desired configuration.

Although embodiments disclosed herein are predominately described in the context of a spatial computing headset 10 with an associated expandable band system 100, it is appreciated that features and aspects of the expandable band systems 100 may be incorporated in other wearable devices, such as, for example, smartwatches. However, it is also appreciated that embodiments of the expandable band systems 100 disclosed herein are particularly well adapted for use with headwear including temple arms to limit undesirable displacement or deformation of such temple arms.

Moreover, it is appreciated that features and aspects of the various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of the claims.

## Claims

1. An expandable band system (100) to assist in securing a wearable device (10) to a user, the system (100) comprising:
a pair of sheath assemblies (102a, 102b); and
an inner band assembly (110) movably coupled to and spanning between the sheath assemblies (102a, 102b), the inner band assembly (110) including a pair of biasing mechanisms (116a, 116b) coupled to the sheath assemblies (102a, 102b) for biasing the sheath assemblies (102a, 102b) together towards a retracted configuration, and
wherein the expandable band system (100) is movable between the retracted configuration, in which the sheath assemblies (102a, 102b) are relatively closer together, and an expanded configuration, in which the sheath assemblies (102a, 102b) are relatively further apart,
wherein each biasing mechanism (116a, 116b) includes an elongated compression spring (118a, 118b),
wherein the inner band assembly (110) further includes a band-like enclosure (112) that surrounds the elongated compression springs (118a, 118b) of the biasing mechanisms (116a, 116b),
wherein each biasing mechanism (116a, 116b) includes a fixed end (122a, 122b) and a floating end (124a, 124b) opposite the fixed end (122a, 122b), the fixed end (122a, 122b) being fixedly secured to a respective one of the sheath assemblies (102a, 102b),
wherein each biasing mechanism (116a, 116b) includes a flexible filament (120a, 120b) extending through the elongated compression spring (118a, 118b), the flexible filament (120a, 120b) including a spring stop at the floating end of the biasing mechanism (116a, 116b), and
wherein the band-like enclosure (112) is slidably received in the sheath assemblies (102a, 102b) to slidably extend from the sheath assemblies (102a, 102b) as the system (100) moves from the retracted configuration to the expanded configuration.

2. The system (100) of claim 1, wherein the band-like enclosure (112) includes a respective compression spring passageway (115a, 115b) for each elongated compression spring (118a, 118b) to assist in preventing the elongated compression springs (118a, 118b) from buckling as the system (100) moves from the retracted configuration to the expanded configuration.

3. The system (100) of claims 1 or 2, wherein a central portion of the band-like enclosure (112) is exposed as the system (100) moves from the retracted configuration to the expanded configuration.

4. The system (100) of any of claims 1 to 3, wherein the band-like enclosure (112) is configured to withdraw from the sheath assemblies (102a, 102b) and simultaneously compress each of the elongated compression springs (118a, 118b) as the system (100) moves from the retracted configuration to the expanded configuration.

5. The system (100) of any of claims 1 to 4, wherein a braking device (130) is provided between at least one of the sheath assemblies (102a, 102b) and the band-like enclosure (112) of the inner band assembly (110) to resist movement of the band-like enclosure (112) relative to the sheath assemblies (102a, 102b).

6. The system (100) of any of claims 1 to 5, wherein a user-manipulable lock device (132) is provided between at least one of the sheath assemblies (102a, 102b) and the band-like enclosure (112) of the inner band assembly (110) to prevent movement of the band-like enclosure (112) relative to the sheath assemblies (102a, 102b).

7. The system (100) of any of claims 1 to 6, wherein each sheath assembly (102a, 102b) comprises a flexible band-like form factor.

8. The system (100) of claim 7, wherein each sheath assembly (102a, 102b) includes a plurality of cage elements (109a, 109b) that collectively define a cage structure that at least partially surrounds a respective end of the band-like enclosure (112) of the inner band assembly (110) when the system (100) is in the retracted configuration.

9. The system (100) of claim 8, wherein, for each sheath assembly (102a, 102b), the plurality of cage elements (109a, 109b) that are spaced apart along a length of the sheath assembly (102a, 102b) to enable the sheath (102a, 102b) assembly to flex and assume a different curvature profile.

10. The system (100) of claims 8 or 9, wherein each sheath assembly (102a, 102b) includes an internal guiding structure (105a, 105b), and wherein the internal guiding structure (105a, 105b) and the plurality of cage elements (109a, 109b) collectively define a band receiving passageway for accommodating the band-like enclosure (112) of the inner band assembly (110).

11. The system (100) of claim 10, wherein each sheath assembly (102a, 102b) includes an inner pad (104a, 104b) for engaging the user's body and an outer cover (103a, 103b), and wherein the inner pad (104a, 104b) and the outer cover (103a, 103b) collectively define an enclosure for housing the internal guiding structure (105a, 105b) and the plurality of cage elements (109a, 109b).

12. The system (100) of any of claims 1 to 11, wherein the sheath assemblies (102a, 102b) and the inner band assembly (110) collectively define a flexible and extendable band-like structure that is conformable to a profile of the user's body.

## Patentansprüche

1. Erweiterbares Bandsystem (100) zur Unterstützung beim Befestigen einer tragbaren Vorrichtung (10) an einem Benutzer, wobei das System (100) Folgendes umfasst:
ein Paar Hüllenanordnungen (102a, 102b); und
eine innere Bandanordnung (110), die beweglich mit den Hüllenanordnungen (102a, 102b) gekoppelt ist und sich zwischen diesen erstreckt, wobei die innere Bandanordnung (110) ein Paar Vorspannmechanismen (116a, 116b) einschließt, die mit den Hüllenanordnungen (102a, 102b) gekoppelt sind, zum Vorspannen der Hüllenanordnungen (102a, 102b) zusammen in Richtung einer zurückgezogenen Konfiguration, und
wobei das erweiterbare Bandsystem (100) zwischen der zurückgezogenen Konfiguration, in der die Hüllenanordnungen (102a, 102b) relativ näher zusammen sind, und einer erweiterten Konfiguration, in der die Hüllenanordnungen (102a, 102b) relativ weiter voneinander entfernt sind, beweglich ist,
wobei jeder Vorspannmechanismus (116a, 116b) eine längliche Druckfeder (118a, 118b) einschließt,
wobei die innere Bandanordnung (110) ferner eine bandartige Umschließung (112) einschließt, die die länglichen Druckfedern (118a, 118b) der Vorspannmechanismen (116a, 116b) umgibt,
wobei jeder Vorspannmechanismus (116a, 116b) ein festes Ende (122a, 122b) und ein schwebendes Ende (124a, 124b) gegenüber dem festen Ende (122a, 122b) einschließt, wobei das feste Ende (122a, 122b) fest an einer jeweiligen der Hüllenanordnungen (102a, 102b) befestigt ist,
wobei jeder Vorspannmechanismus (116a, 116b) ein flexibles Filament (120a, 120b) einschließt, das sich durch die längliche Druckfeder (118a, 118b) erstreckt, wobei das flexible Filament (120a, 120b) einen Federanschlag am schwebenden Ende des Vorspannmechanismus (116a, 116b) einschließt, und
wobei die bandartige Umschließung (112) gleitbar in den Hüllenanordnungen (102a, 102b) aufgenommen ist, um sich gleitbar aus den Hüllenanordnungen (102a, 102b) zu erstrecken, wenn sich das System (100) von der zurückgezogenen Konfiguration in die erweiterte Konfiguration bewegt.

2. System (100) nach Anspruch 1, wobei die bandartige Umschließung (112) einen jeweiligen Druckfederdurchgang (115a, 115b) für jede längliche Druckfeder (118a, 118b) einschließt, zur Unterstützung beim Verhindern, dass die länglichen Druckfedern (118a, 118b) knicken, wenn sich das System (100) von der zurückgezogenen Konfiguration in die erweiterte Konfiguration bewegt.

3. System (100) nach Anspruch 1 oder 2, wobei ein zentraler Abschnitt der bandartigen Umschließung (112) freigelegt ist, wenn sich das System (100) von der zurückgezogenen Konfiguration in die erweiterte Konfiguration bewegt.

4. System (100) nach einem der Ansprüche 1 bis 3, wobei die bandartige Umschließung (112) konfiguriert ist, sich aus den Hüllenanordnungen (102a, 102b) herauszuziehen und gleichzeitig jede der länglichen Druckfedern (118a, 118b) zu komprimieren, wenn sich das System (100) von der zurückgezogenen Konfiguration in die erweiterte Konfiguration bewegt.

5. System (100) nach einem der Ansprüche 1 bis 4, wobei eine Bremsvorrichtung (130) zwischen mindestens einer der Hüllenanordnungen (102a, 102b) und der bandartigen Umschließung (112) der inneren Bandanordnung (110) vorgesehen ist, um einer Bewegung der bandartigen Umschließung (112) relativ zu den Hüllenanordnungen (102a, 102b) zu widerstehen.

6. System (100) nach einem der Ansprüche 1 bis 5, wobei eine benutzermanipulierbare Verriegelungsvorrichtung (132) zwischen mindestens einer der Hüllenanordnungen (102a, 102b) und der bandartigen Umschließung (112) der inneren Bandanordnung (110) vorgesehen ist, um eine Bewegung der bandartigen Umschließung (112) relativ zu den Hüllenanordnungen (102a, 102b) zu verhindern.

7. System (100) nach einem der Ansprüche 1 bis 6, wobei jede Hüllenanordnung (102a, 102b) einen flexiblen bandartigen Formfaktor umfasst.

8. System (100) nach Anspruch 7, wobei jede Hüllenanordnung (102a, 102b) eine Vielzahl von Käfigelementen (109a, 109b) einschließt, die gemeinsam eine Käfigstruktur definieren, die zumindest teilweise ein jeweiliges Ende der bandartigen Umschließung (112) der inneren Bandanordnung (110) umgibt, wenn sich das System (100) in der zurückgezogenen Konfiguration befindet.

9. System (100) nach Anspruch 8, wobei, für jede Hüllenanordnung (102a, 102b), die Vielzahl von Käfigelementen (109a, 109b), die entlang einer Länge der Hüllenanordnung (102a, 102b) beabstandet sind, um zu ermöglichen, dass die Hüllenanordnung (102a, 102b) sich biegt und ein anderes Krümmungsprofil annimmt.

10. System (100) nach Anspruch 8 oder 9, wobei jede Hüllenanordnung (102a, 102b) eine innere Führungsstruktur (105a, 105b) einschließt, und wobei die innere Führungsstruktur (105a, 105b) und die Vielzahl von Käfigelementen (109a, 109b) gemeinsam einen Bandaufnahmedurchgang definieren, zum Unterbringen der bandartigen Umschließung (112) der inneren Bandanordnung (110).

11. System (100) nach Anspruch 10, wobei jede Hüllenanordnung (102a, 102b) ein inneres Polster (104a, 104b) zum Eingreifen in den Körper des Benutzers und eine äußere Abdeckung (103a, 103b) einschließt, und wobei das innere Polster (104a, 104b) und die äußere Abdeckung (103a, 103b) gemeinsam eine Umschließung definieren zum Aufnehmen der inneren Führungsstruktur (105a, 105b) und der Vielzahl von Käfigelementen (109a, 109b).

12. System (100) nach einem der Ansprüche 1 bis 11, wobei die Hüllenanordnungen (102a, 102b) und die innere Bandanordnung (110) gemeinsam eine flexible und dehnbare bandartige Struktur definieren, die an ein Profil des Körpers des Benutzers anpassbar ist.

## Revendications

1. Système de bande extensible (100) destiné à aider à fixer un dispositif vestimentaire (10) sur un utilisateur, le système (100) comprenant :
une paire d'ensembles gaines (102a, 102b) ; et
un ensemble bande interne (110) couplé de manière mobile aux ensembles gaines (102a, 102b) et s'étendant entre eux, l'ensemble bande interne (110) comportant une paire de mécanismes de sollicitation (116a, 116b) couplés aux ensembles gaines (102a, 102b) pour solliciter les ensembles gaines (102a, 102b) ensemble vers une configuration rétractée, et
dans lequel le système de bande extensible (100) est mobile entre la configuration rétractée, dans laquelle les ensembles gaines (102a, 102b) sont relativement plus proches l'un de l'autre, et une configuration déployée, dans laquelle les ensembles gaines (102a, 102b) sont relativement plus éloignés l'un de l'autre,
dans lequel chaque mécanisme de sollicitation (116a, 116b) comporte un ressort de compression (118a, 118b) allongé,
dans lequel l'ensemble bande interne (110) comporte en outre une enceinte en forme de bande (112) qui entoure les ressorts de compression (118a, 118b) allongés des mécanismes de sollicitation (116a, 116b),
dans lequel chaque mécanisme de sollicitation (116a, 116b) comporte une extrémité fixe (122a, 122b) et une extrémité flottante (124a, 124b) opposée à l'extrémité fixe (122a, 122b), l'extrémité fixe (122a, 122b) étant fixée de manière fixe à un ensemble gaine respectif des ensembles gaines (102a, 102b),
dans lequel chaque mécanisme de sollicitation (116a, 116b) comporte un filament flexible (120a, 120b) s'étendant à travers le ressort de compression (118a, 118b) allongé, le filament flexible (120a, 120b) comportant une butée de ressort au niveau de l'extrémité flottante du mécanisme de sollicitation (116a, 116b), et
dans lequel l'enceinte en forme de bande (112) est reçue de manière coulissante dans les ensembles gaines (102a, 102b) pour s'étendre de manière coulissante à partir des ensembles gaines (102a, 102b) à mesure que le système (100) se déplace de la configuration rétractée à la configuration déployée.

2. Système (100) selon la revendication 1, dans lequel l'enceinte en forme de bande (112) comporte un passage de ressort de compression (115a, 115b) respectif pour chaque ressort de compression (118a, 118b) allongé destiné à aider à empêcher les ressorts de compression (118a, 118b) allongés de se déformer à mesure que le système (100) se déplace de la configuration rétractée à la configuration déployée.

3. Système (100) selon la revendication 1 ou la revendication 2, dans lequel une partie centrale de l'enceinte en forme de bande (112) est exposée à mesure que le système (100) se déplace de la configuration rétractée à la configuration déployée.

4. Système (100) selon l'une quelconque des revendications 1 à 3, dans lequel l'enceinte en forme de bande (112) est configurée pour se retirer des ensembles gaines (102a, 102b) et comprimer simultanément chacun des ressorts de compression (118a, 118b) allongés à mesure que le système (100) se déplace de la configuration rétractée à la configuration déployée.

5. Système (100) selon l'une quelconque des revendications 1 à 4, dans lequel un dispositif de freinage (130) est fourni entre au moins l'un des ensembles gaines (102a, 102b) et l'enceinte en forme de bande (112) de l'ensemble bande interne (110) pour résister au mouvement de l'enceinte en forme de bande (112) par rapport aux ensembles gaines (102a, 102b).

6. Système (100) selon l'une quelconque des revendications 1 à 5, dans lequel un dispositif de verrouillage manipulable par l'utilisateur (132) est fourni entre au moins l'un des ensembles gaines (102a, 102b) et l'enceinte en forme de bande (112) de l'ensemble bande interne (110) pour empêcher le mouvement de l'enceinte en forme de bande (112) par rapport aux ensembles gaines (102a, 102b).

7. Système (100) selon l'une quelconque des revendications 1 à 6, dans lequel chaque ensemble gaine (102a, 102b) comprend un facteur de forme flexible en forme de bande.

8. Système (100) selon la revendication 7, dans lequel chaque ensemble gaine (102a, 102b) comporte une pluralité d'éléments de cage (109a, 109b) qui définissent collectivement une structure de cage qui entoure au moins partiellement une extrémité respective de l'enceinte en forme de bande (112) de l'ensemble bande interne (110) lorsque le système (100) est dans la configuration rétractée.

9. Système (100) selon la revendication 8, dans lequel, pour chaque ensemble gaine (102a, 102b), la pluralité d'éléments de cage (109a, 109b) qui sont espacés le long d'une longueur de l'ensemble gaine (102a, 102b) pour permettre à l'ensemble gaine (102a, 102b) de fléchir et d'adopter un profil de courbure différent.

10. Système (100) selon la revendication 8 ou la revendication 9, dans lequel chaque ensemble (102a, 102b) comporte une structure de guidage interne (105a, 105b), et dans lequel la structure de guidage interne (105a, 105b) et la pluralité d'éléments de cage (109a, 109b) définissent collectivement un passage de réception de bande pour accueillir l'enceinte en forme de bande (112) de l'ensemble bande interne (110).

11. Système (100) selon la revendication 10, dans lequel chaque ensemble gaine (102a, 102b) comporte un coussinet interne (104a, 104b) destiné à entrer en contact avec le corps de l'utilisateur et un couvercle externe (103a, 103b), et dans lequel le coussinet interne (104a, 104b) et le couvercle externe (103a, 103b) définissent collectivement une enceinte destinée à loger la structure de guidage interne (105a, 105b) et la pluralité d'éléments de cage (109a, 109b).

12. Système (100) selon l'une quelconque des revendications 1 à 11, dans lequel les ensembles gaines (102a, 102b) et l'ensemble bande interne (110) définissent collectivement une structure en forme de bande flexible et pouvant s'étendre qui s'adapte à un profil du corps de l'utilisateur.
